# DEMANDE DE BREVET EUROPEEN

(11) **EP 0 759 391 A1**
(43) Date de publication de la demande: **26.02.1997**
(21) Numéro de dépôt: 96401364.3
(22) Date de dépôt: 20.06.1996
(51) Int. Cl.: B62D 1/19

(54) **Arbre intermédiaire de direction, notamment pour véhicule automobile**

(30) Priorité: 24.07.1995 FR 9508960
(71) Demandeur: ECIA - EQUIPEMENTS ET COMPOSANTS POUR L'INDUSTRIE AUTOMOBILE, F-25400 Audincourt (FR)
(72) Inventeur: Passebecq, Ghislain, 25400 Audincourt (FR); Hien, Laurent, F-25700 Valentigney (FR)
(74) Mandataire: Habasque, Etienne Joel Jean-François

(57) **Abrégé**

Cet arbre, dont une première extrémité (2) est adaptée pour être reliée à une extrémité d'un arbre de direction (3), dont l'autre extrémité est adaptée pour porter le volant de direction du véhicule, et dont une seconde extrémité (4) est adaptée pour être reliée au reste du mécanisme de direction (5) du véhicule, est caractérisé en ce que sa première extrémité comporte une fourche de cardan (6) venue de matière avec le reste de l'arbre, en ce que sa seconde extrémité comporte une fourche de cardan (7) reliée au reste de celui-ci par l'intermédiaire de moyens de filtrage de vibrations (8) et en ce que sa portion intermédiaire entre ses première et seconde extrémités, comporte des ondulations (11) de déformation de cet arbre en cas de choc.

## Description

La présente invention concerne un arbre intermédiaire de direction notamment pour véhicule automobile.

On connaît déjà dans l'état de la technique, des arbres de ce type dont une première extrémité est adaptée pour être reliée à une extrémité d'un arbre de direction dont l'autre extrémité est adaptée pour porter le volant de direction du véhicule, et dont une seconde extrémité est adaptée pour être reliée au reste du mécanisme de direction du véhicule.

Cet arbre intermédiaire de direction outre sa fonction de transmission de mouvement, remplie un certain nombre d'autres fonctions, parmi lesquelles une absorption de vibrations et une absorption d'énergie en cas de choc.

Dans l'état de la technique, cet arbre comporte par exemple plusieurs tronçons d'arbre raccordés les uns aux autres (voir par exemple les documents DE-A-2 212 713 et FR-A-2 544 816).

On conçoit que cette structure présente un certain nombre d'inconvénients notamment au niveau de sa complexité et de son coût de réalisation.

Le but de l'invention est donc de résoudre ces problèmes.

A cet effet, l'invention a pour objet un arbre intermédiaire de direction notamment pour véhicule automobile, dont une première extrémité est adaptée pour être reliée à une extrémité d'un arbre de direction, dont l'autre extrémité est adaptée pour porter le volant de direction du véhicule, et dont une seconde extrémité est adaptée pour être reliée au reste du mécanisme de direction du véhicule, caractérisé en ce que sa première extrémité comporte une fourche de cardan venue de matière avec le reste de l'arbre, en ce que sa seconde extrémité comporte une fourche de cardan reliée au reste de celui-ci par l'intermédiaire de moyens de filtrage de vibrations et en ce que sa portion intermédiaire entre ses première et seconde extrémités, comporte des ondulations de déformation de cet arbre en cas de choc.

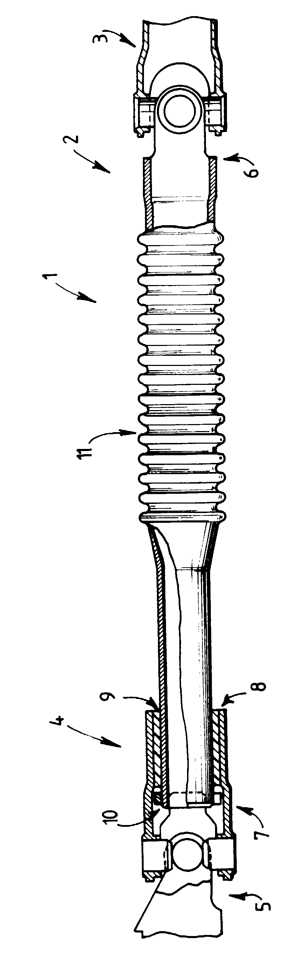

L'invention sera mieux comprise à la lecture de la description qui va suivre, donnée uniquement à titre d'exemple et faite en se référant au dessin annexé qui représente une vue de côté avec des portions en coupe illustrant la structure d'un exemple de réalisation d'un arbre intermédiaire de direction selon l'invention.

On reconnaît en effet sur cette figure, un arbre intermédiaire de direction notamment pour véhicule automobile, désigné par la référence générale 1.

Une première extrémité 2 de cet arbre intermédiaire de direction est adaptée pour être reliée à une extrémité correspondante d'un arbre de direction 3 dont l'autre extrémité est adaptée pour recevoir le volant de direction du véhicule.

Une seconde extrémité de cet arbre intermédiaire désignée par la référence générale 4 sur cette figure, est adaptée pour être reliée au reste du mécanisme de direction 5 du véhicule.

Selon l'invention, la première extrémité de l'arbre intermédiaire comporte une fourche de cardan 6 intégrée, c'est à dire venue de matière avec le reste de cet arbre, tandis que la seconde extrémité de cet arbre intermédiaire comporte une fourche de cardan 7 reliée au reste de celui-ci par l'intermédiaire de moyens de filtrage de vibrations désignés par la référence générale 8 sur cette figure.

La fourche de cardan intégrée est réalisée de manière classique.

Les moyens de filtrage de vibrations comprennent par exemple un manchon, désigné par la référence générale 9, en matière élastiquement déformable dont les faces interne et externe sont fixées respectivement par exemple sur l'arbre intermédiaire 1 et la fourche de cardan 7, tandis qu'une clé de sécurité de type classique 10 est également prévue pour limiter les déplacements angulaires de la fourche par rapport à l'arbre.

Cette structure de clé étant bien connue dans l'état de la technique, on ne la décrira pas plus en détail par la suite.

On notera également que la portion intermédiaire de cet arbre intermédiaire de direction, c'est à dire entre ses première et seconde extrémités, comporte des ondulations désignées par la référence générale 11 sur cette figure, autorisant une déformation de cet arbre en cas de choc, et réalisées de manière classique.

Ces ondulations sont par exemple adaptées pour obtenir une absorption d'énergie et empêcher toute remontée de l'ensemble de colonne de direction à l'intérieur de l'habitacle du véhicule, par exemple en cas de choc sur le reste du mécanisme de direction du véhicule.

On conçoit alors que cet arbre intermédiaire de direction présente une structure extrêmement simple et peu coûteuse à réaliser dans la mesure où elle est réalisée avec très peu de pièces séparées.

## Revendications

1. Arbre intermédiaire de direction, notamment pour véhicule automobile, dont une première extrémité (2) est adaptée pour être reliée à une extrémité d'un arbre de direction (3), dont l'autre extrémité est adaptée pour porter le volant de direction du véhicule, et dont une seconde extrémité (4) est adaptée pour être reliée au reste du mécanisme de direction (5) du véhicule, caractérisé en ce que sa première extrémité comporte une fourche de cardan (6) venue de matière avec le reste de l'arbre, en ce que sa seconde extrémité comporte une fourche de cardan (7) reliée au reste de celui-ci par l'intermédiaire de moyens de filtrage de vibrations (8) et en ce que sa portion intermédiaire entre ses première et seconde extrémités, comporte des ondulations (11) de déformation de cet arbre en cas de choc.

2. Arbre selon la revendication 1, caractérisé en ce que les moyens de filtrage de vibrations comprennent un manchon (9) en matériau élastiquement déformable interposé entre l'arbre intermédiaire et la fourche de cardan, ce manchon étant associé à une clé (10) de limitation du déplacement angulaire de la fourche par rapport à l'arbre.
